(19) Europäisches Patentamt
European Patent Office
Office européen des brevets

(11) **EP 3 705 369 B1**

(12) **FASCICULE DE BREVET EUROPEEN**

(45) Date de publication et mention de la délivrance du brevet:
**22.10.2025 Bulletin 2025/43**

(21) Numéro de dépôt: **20158549.4**

(22) Date de dépôt: **20.02.2020**

(51) Classification Internationale des Brevets (IPC):
**B61L 1/06** (2006.01)    B61L 27/00 (2022.01)

(52) Classification Coopérative des Brevets (CPC):
**B61L 1/06;** B61L 27/50

(54) **PROCÉDÉ DE DÉTECTION D'ANOMALIE DE MATÉRIEL ROULANT EXPLOITANT UN SIGNAL DE DÉFORMATION D'UN SUPPORT DE RAIL**

VERFAHREN ZUR ERKENNUNG VON ANOMALIEN IN SCHIENENFAHRZEUGEN, DAS EIN SIGNAL FÜR DIE VERFORMUNG EINES SCHIENENTRÄGERS AUSWERTET

METHOD FOR DETECTING ANOMALIES IN ROLLING STOCK USING A SIGNAL FOR DEFORMATION OF A RAIL SUPPORT

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **04.03.2019 FR 1902204**

(43) Date de publication de la demande:
**09.09.2020 Bulletin 2020/37**

(73) Titulaire: **Commissariat à l'Energie Atomique et aux Energies Alternatives**
**75015 Paris (FR)**

(72) Inventeur: **LEIRENS, Sylvain**
**38054 GRENOBLE CEDEX 09 (FR)**

(74) Mandataire: **Brevalex**
**Tour Trinity**
**1 B Place de la Défense**
**92400 Courbevoie (FR)**

(56) Documents cités:
EP-A1- 0 519 802      EP-A1- 2 477 086
EP-B1- 2 862 778      CN-A- 103 234 720

• LI ZHENGCHAO ET AL: "Fault Detection Based on a Bio-Inspired Vibration Sensor System", IEEE ACCESS, vol. 6, 27 December 2017 (2017-12-27), pages 10867 - 10877, XP011678997, DOI: 10.1109/ACCESS.2017.2785406

• DONG WANG ET AL: "Robust health evaluation of gearbox subject to tooth failure withwavelet decomposition", JOURNAL OF SOUND AND VIBRATION 324 (2009) 1141-1157, 17 March 2009 (2009-03-17), XP002795272, Retrieved from the Internet <URL:https://reader.elsevier.com/reader/sd/pii/S0022460X09001618?token=34CD3BF7F25BCB0539AB674201F9CF7EF2BF57DB9E5AC3CDC7EC0E4A9E848E85BD95A9C744A283112C4E75071450A2AA> [retrieved on 20191028]

• HAN LI ET AL: "A wheel treads flat detection system for high-speed railway", ELECTRICAL&ELECTRONICS ENGINEERING (EEESYM), 2012 IEEE SYMPOSIUM ON, IEEE, 24 June 2012 (2012-06-24), pages 59 - 62, XP032217440, ISBN: 978-1-4673-2363-5, DOI: 10.1109/EEESYM.2012.6258587

• DZAKMIC SEJLA ET AL: "Combined Fourier Transform and Mexican Hat Wavelet for Fault Detection in Distribution Networks", 2017 9TH IEEE-GCC CONFERENCE AND EXHIBITION (GCCCE), IEEE, 8 May 2017 (2017-05-08), pages 1 - 6, XP033394804, [retrieved on 20180827], DOI: 10.1109/IEEEGCC.2017.8447905

EP 3 705 369 B1

## Description

## DOMAINE TECHNIQUE

Le domaine de l'invention est celui du suivi de l'état de santé d'un matériel roulant sur des rails de voie ferrée, notamment un train, un métro ou un tramway. L'invention vise plus particulièrement à détecter des anomalies de tels matériels à partir de mesures de déformation des supports des rails.

## TECHNIQUE ANTÉRIEURE

Les supports de rails pour voie ferrée sont des objets placés sous les rails afin de fournir à ceux-ci un support adapté aux contraintes auxquelles les rails sont soumis et à maintenir leur écartement tout en répartissant les charges sur l'assise de ces supports, par exemple du ballast ou une dalle en béton. Ces supports peuvent être des traverses ou encore des supports pour appareil de voie au niveau des aiguillages.

Comme décrit dans l'article de V. Belotti et al. intitulé "Wheel-flat diagnostic tool via wavelet transform," Mech. Syst. Signal Process., vol. 20, no. 8, pp. 1953-1966, Nov. 2006, ces supports peuvent être instrumentés avec des accéléromètres pour permettre de détecter des zones plates sur des roues de trains (de telles roues étant désignées par le terme de roues carrées dans ce qui suit). Cette détection est réalisée au moyen d'une transformée en ondelettes discrète des signaux fournis par les accéléromètres. Les coefficients des deux plus hauts niveaux de la décomposition en ondelettes sont exploités pour détecter le passage des essieux en regard d'un accéléromètre et de là en déduire la vitesse du train et construire un masque utilisé lors de la détection de roue carrée pour minimiser les fausses alarmes. Cette détection est réalisée par comparaison des coefficients d'un bas niveau de la décomposition en ondelettes, non masqués, avec un seuil. Cette méthode s'avère relativement complexe du fait du recours au masquage et repose sur une mesure d'accélération liée à la force de contact rail-roue qui est difficile à modéliser et donc à analyser.

Les supports de rails peuvent également être instrumentés, par exemple en y intégrant des capteurs en fibre optique à réseau de Bragg comme décrit dans le brevet FR 2 983 812 B1, pour en mesurer des micro-déformations et évaluer ainsi évaluer les contraintes auxquelles ils sont soumis, notamment lors du passage d'un matériel roulant. Ces mesures peuvent ainsi être exploitées pour détecter des contraintes anormales liées au passage d'un matériel roulant défectueux, et ainsi détecter une anomalie du matériel roulant.

Le document EP 2 862 778 B1 divulgue un procédé mis en œuvre par ordinateur de détection d'une anomalie d'un matériel roulant sur des rails de voie ferrée qui reposent sur un support de rails, le procédé comprenant une évaluation d'un signal de mesure délivré par un capteur de déformation pour détecter une anomalie du matériel roulant.

Une méthode à cet effet consiste à calculer la différence entre la valeur maximale et la valeur minimale d'une séquence d'échantillons d'un signal de déformation d'une traverse lors du passage d'un train sur cette traverse. Cette méthode, bien que particulièrement simple, ne permet que de trouver les anomalies les plus flagrantes.

Une approche statistique peut aussi être utilisée pour rechercher des valeurs aberrantes dans les mesures. Une telle approche fonctionne bien en général pour les trains de passagers dont la charge par essieu est bien répartie. Mais cette approche est facilement mise en défaut pour des trains qui présentent des distributions de charges très irrégulières, par exemple des trains de marchandise.

## EXPOSÉ DE L'INVENTION

L'invention vise à fournir une technique plus robuste de détection d'anomalie d'un matériel roulant au moyen d'un signal de mesure de déformation d'un support de rails de voie ferrée.

L'invention propose pour cela un procédé mis en œuvre par ordinateur de détection d'une anomalie d'un matériel roulant sur des rails de voie ferrée qui reposent sur un support de rails. Ce procédé comprend une décomposition par transformée en ondelettes discrète d'un signal de mesure délivré par un capteur de déformation du support de rails en un signal d'approximation et une série de signaux de détail. Un signal de résidu est formé par la somme de tout ou partie des signaux de détail et le procédé comprend une recherche de points aberrants dans le signal de résidu pour détecter une anomalie du matériel roulant.

Certains aspects préférés mais non limitatifs de ce procédé sont les suivants :

la recherche de points aberrants dans le signal de résidu consiste à rechercher les points du signal de résidu dont la valeur absolue de l'amplitude $|r_i|$ satisfait $|r_i| > \mu_{v,R} + \alpha\sigma_{v,R}$, où $\mu_{v,R}$ est la moyenne du bruit contenu dans le signal de résidu, $\sigma_{v,R}$ est l'écart-type du bruit contenu dans le signal de résidu et $\alpha$ est un paramètre de réglage d'une sensibilité de détection ;

il comprend en outre une étape préalable de détermination d'un niveau de décomposition de la décomposition par transformée en ondelettes discrète du signal de mesure, ledit niveau de décomposition minimisant une erreur quadratique donnée par $w(\sigma_{v,R} - \sigma_{v,S})^2 + (\sigma_R - \sigma_{v,S})^2$, où w est un paramètre de pondération, $\sigma_{v,R}$ est l'écart-type du bruit contenu dans le signal de détails, $\sigma_{v,S}$ est l'écart-type du bruit contenu dans le signal de mesure et $\sigma_R$ est l'écart-type du signal de détails ;

il comprend en outre en cas de détection d'une anomalie du matériel roulant une classification de l'anomalie détectée en un premier type d'anomalie ou un deuxième type d'anomalie ;

l'anomalie détectée est classifiée comme anomalie du premier type lorsqu'elle est associée à un pic simple du signal de résidu et est classifiée comme anomalie du second type lorsqu'elle est associée à au moins deux pics simples du signal de résidu de signes opposés ;

l'anomalie détectée est classifiée comme anomalie du second type lorsqu'elle est associée à des points aberrants dont un présente une amplitude inférieure à un premier seuil négatif et dont un autre présente une amplitude supérieure à un second seuil positif;

il comprend en outre une étape de détermination d'une gravité d'une anomalie détectée ;

il comprend en outre une étape de détection de pics dans le signal d'approximation.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

[Fig. 1] représente un exemple de signal de mesure délivré par un capteur de déformation d'un support de rails, ce signal étant porteur d'un transitoire induit par une anomalie de matériel roulant ;

[Fig. 2] est un zoom du signal de la figure 1 autour du transitoire caractéristique de l'anomalie ;

[Fig. 3] représente en haut le signal de mesure et le signal d'approximation et en bas le signal de résidu dans lequel des points aberrants ont été détectés ;

[Fig. 4] est un zoom de la figure 3 autour du transitoire caractéristique de l'anomalie ;

[Fig. 5] représente un signal de résidu porteur d'un pic simple caractéristique d'une anomalie de type surcharge d'essieu ;

[Fig. 6] représente un signal de résidu porteur de deux pics simples de signes opposés caractéristiques d'une anomalie de type roue carrée ;

[Fig. 7] illustre un mode de réalisation possible de la détection d'une anomalie de type roue carrée ;

[Fig. 8] représente un signal de mesure et son signal d'approximation à partir duquel des pics d'essieux sont détectés ;

[Fig. 9] est un ordinogramme d'un procédé conforme à l'invention.

## EXPOSÉ DÉTAILLÉ DE MODES DE RÉALISATION PARTICULIERS

L'invention porte sur un procédé mis en œuvre par ordinateur de détection d'une anomalie d'un matériel roulant sur des rails de voie ferrée qui reposent sur un support de rails. L'invention exploite un signal de mesure délivré par un capteur apte à mesurer la déformation d'un support de rails de voie ferrée. Le capteur peut être accolé à la surface du support ou être intégré au sein du support.

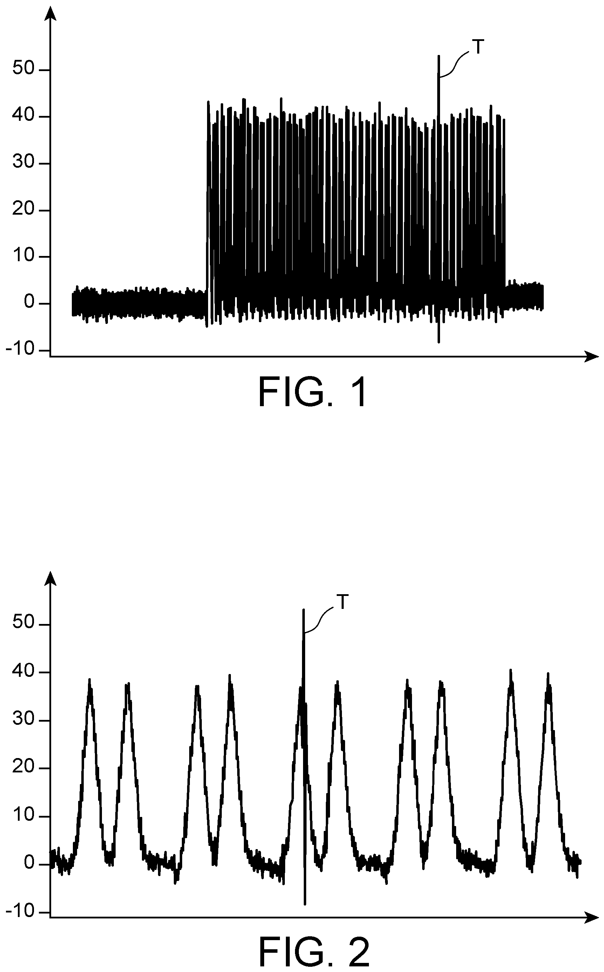

Dans ce qui suit, on prend l'exemple d'un capteur de déformation de type fibre optique à réseau de Bragg dont le signal de mesure est par exemple échantillonné à 500 ou 1000 Hz. On a ainsi représenté sur la figure 1 un enregistrement d'une trentaine de secondes du signal de mesure délivré par un tel capteur au cours duquel un train passe sur le support. Cet enregistrement est porteur d'un transitoire T induit par une anomalie du train. La figure 2 est un zoom du signal de la figure 1 autour de ce transitoire T. On y reconnait notamment la forme caractéristique en « M » des pics liés au passage des essieux des locomotives et des wagons sur le support équipé du capteur Cet enregistrement peut faire l'objet d'un prétraitement comportant une compensation de décalage et éventuellement une normalisation.

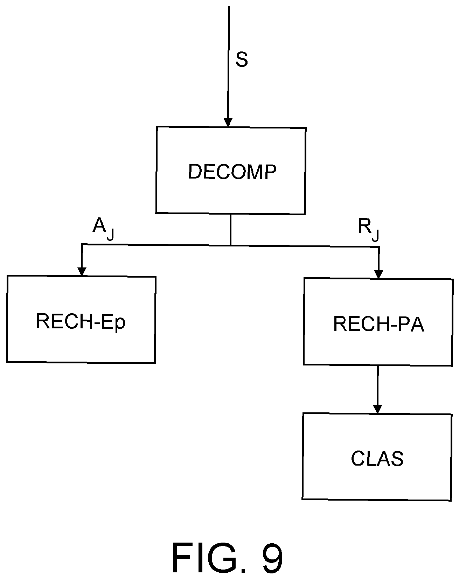

Afin de détecter un transitoire caractéristique d'une anomalie de matériel roulant, le procédé selon l'invention comporte, en référence à la figure 9, une étape DECOMP consistant, le cas échéant après le prétraitement susmentionné, à décomposer, par transformée en ondelettes discrète, le signal de mesure S délivré par le capteur de déformation en un signal d'approximation $A_J$ et un signal de résidu $R_J$. Cette décomposition est réalisée jusqu'à un niveau de décomposition J selon la procédure conventionnelle suivante. Le signal de mesure S est décomposé en un signal d'approximation $A_1$ qui propose une vision lissée du signal d'origine et en un signal de détail $D_1$ amplifiant les composantes hautes fréquences du signal. Le signal d'approximation $A_1$ est à son tour décomposé en un signal d'approximation $A_2$ et en un signal de détail $D_2$ (qui apparaît donc comme un terme correctif entre les deux approximations successives $A_1$ et $A_2$). Cette procédure est répétée jusqu'à obtenir le niveau de décomposition souhaité J. On obtient au final un signal d'approximation $A_J$ et une série de signaux de détail $D_1$, $D_2$, ..., $D_J$ et le signal S se décompose ainsi selon $S = A_J + \sum_{j \leq J} D_j$. On forme un signal de résidu $R_J$ avec la somme de tout ou partie des signaux de détail. Ainsi le signal de résidu peut consister en la somme complète de 1 à J des signaux de détails, mais peut aussi se constituer d'un choix de signaux de détails particuliers (par exemple pour J = 3, $R_3$ = D1+D3, D2 non inclus).

La décomposition du signal S produit plus précisément un ensemble de coefficients notés $cA_J$ et $cD_j$ ($1 \leq j \leq J$) pour approximation et détails respectivement. A partir de ces coefficients, on peut reconstruire le signal S au niveau souhaité, afin d'une part d'en obtenir l'approximation $A_J$ (contenu basses fréquences) et la somme des signaux de détail $\Sigma_{j \leq J} D_j$ (contenu hautes fréquences) tels que le signal S se décompose selon $S = A_J + \Sigma_{j \leq J} D_j$, avec la relation $A_{J-1} = A_J + D_J$ entre deux approximations successives et $D_j = \sum_{k \in \mathbb{Z}} cD(j,k)\psi_{j,k}$ , où la variable $k$ représente le déphasage temporel et $\psi_{j,k}$ est l'ondelette au niveau $j$ déphasée *de k* échantillons.

Contrairement aux fonctions sinus et cosinus utilisées dans la transformée de Fourier, les fonctions $\psi_{j,k}$ sont localisée temporellement : seulement une partie des échantillons est non nulle. En choisissant le niveau de décomposition de manière adéquate, on peut séparer le signal de micro déformations (i.e. les pics d'essieux) du bruit de mesure et des anomalies du matériel roulant qui se caractérisent par des phénomènes transitoires brusques localisés temporellement.

Le choix de l'ondelette est guidé par la forme du signal S à décomposer, en sélectionnant typiquement une ondelette ressemblante à ce signal. Dans les exemples exposés ci-après, ce choix s'est porté sur l'ondelette Symlet 5.

Le choix J du niveau de décomposition est réalisé de manière à assurer le meilleur compromis de séparation. Dans un mode de réalisation possible, le procédé selon l'invention comprend une étape préalable de détermination d'un niveau de décomposition de la décomposition par transformée en ondelettes discrète du signal de mesure, ledit niveau de décomposition minimisant l'erreur quadratique $w(\sigma_{v,R} - \sigma_{v,S})^2 + (\sigma_R - \sigma_{v,S})^2$, où w est un paramètre de pondération, $\sigma_{v,R}$ est l'écart-type du bruit contenu dans le signal de résidu, $\sigma_{v,S}$ est l'écart-type du bruit contenu dans le signal de mesure S et $\sigma_R$ est l'écart-type du signal de résidu.

En effet, une bonne séparation implique :

- d'une part, que l'écart-type du bruit contenu dans le signal de résidu $\sigma_{v,R}$ et l'écart-type du bruit dans le signal de mesure $\sigma_{v,S}$ soient les plus proches possible, i.e. $\sigma_{v,R} \approx \sigma_{v,S}$ ; et
- d'autre part, que l'écart-type du signal de résidu $\sigma_R$ reste proche de l'écart-type du bruit dans le signal de mesure $\sigma_{v,S}$, en général légèrement supérieur car il peut subsister une contribution des pics d'essieux et du fait de la présence d'une anomalie, i.e. $\sigma_R \gtrsim \sigma_{v,S}$.

En procédant de la sorte, on assure que les signaux de détail ne contiennent principalement que le bruit et les transitoires dus à la présence d'une anomalie.

L'invention n'est pas exclusive de cet exemple du choix du niveau de décomposition, ce dernier pouvant être réalisé selon d'autres méthodes telles que par exemple des méthodes basées sur l'énergie contenue dans les signaux de détail.

L'écart-type du bruit contenu dans le signal de mesure $\sigma_{v,S}$ peut être facilement estimé sur la partie du signal enregistrée avant le passage du train, par exemple sur les n premières secondes sur l'exemple de la figure 1 (avec par exemple n=3 secondes).

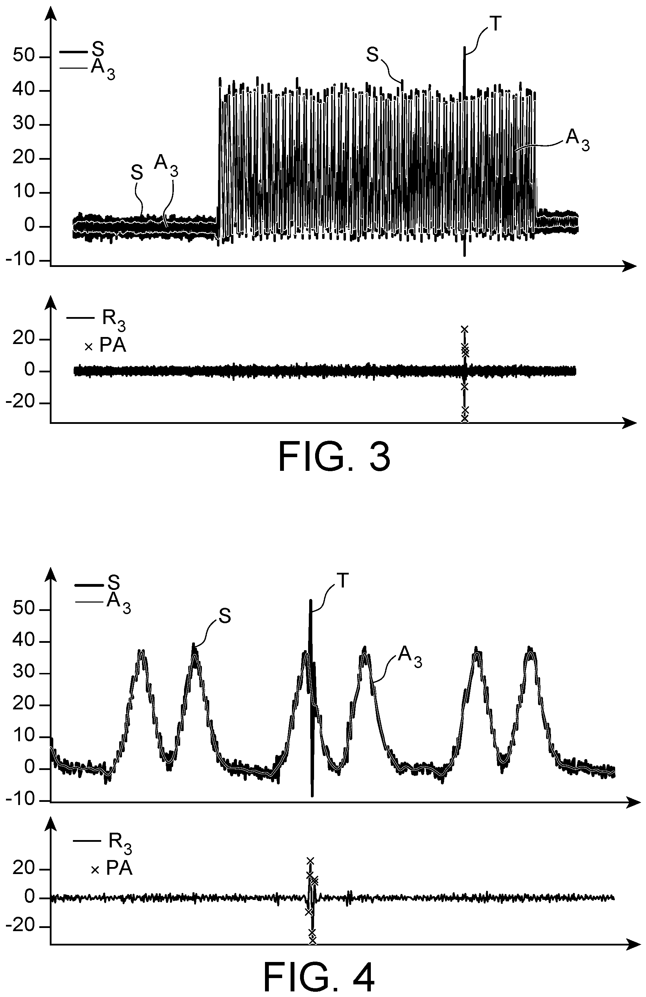

Dans un exemple de réalisation exploitant l'ondelette Symlet 5, le niveau de décomposition choisi est J=3. On a représenté dans la portion supérieure de la figure 3 le signal de mesure S et le signal d'approximation $A_3$ et sur la portion inférieure de cette même figure 3 le signal de résidu $R_3$. La figure 4 est un zoom de la figure 3 autour du transitoire T caractéristique de l'anomalie. L'écart-type du bruit affectant le signal de mesure $\sigma_{v,S}$ est estimé à 1.08592 sur les 3 premières secondes du signal. Le niveau de décomposition J=3 donne un écart-type du bruit contenu dans le signal de résidu $\sigma_{v,R}$ égal à 1.03472 et un écart-type des résidus $\sigma_R$ égal à 1.20381.

Dans un mode de réalisation possible, un seuillage des coefficients de la décomposition (par exemple un seuillage doux dit « soft coefficient thresholding ») peut être mis en œuvre afin de réduire le niveau de bruit dans la reconstruction et obtenir un signal de résidu ne contenant idéalement que les transitoires caractéristiques d'éventuelles anomalies.

Suite à la décomposition DECOMP du signal de mesure en un signal d'approximation et un signal de résidu, le procédé selon l'invention comprend une étape RECH-PA de recherche de points aberrants dans le signal de résidu pour détecter une anomalie du matériel roulant. Ces points aberrants PA apparaissent sous la forme de cercles pleins sur les figures 3 et 4. Ils correspondent à des points qui « sortent » du bruit. La détection d'une anomalie s'opère pour une succession de points aberrants, par exemple sur une fenêtre temporelle suivant un point aberrant dont la taille est variable selon la vitesse du matériel roulant.

La recherche de points aberrants dans le signal de résidu peut notamment consister à rechercher les points du signal de résidu dont la valeur absolue de l'amplitude $|r_i|$ satisfait $|r_i| > \mu_{v,R} + \alpha\sigma_{v,R}$, où $\mu_{v,R}$ est la moyenne du bruit contenu dans le de résidu pendant les n premières secondes (i.e. avant passage du train), $\sigma_{v,R}$ est l'écart-type du bruit contenu dans le signal de résidu et $\alpha$ est un paramètre de réglage d'une sensibilité de détection. La moyenne $\mu_{v,R}$ est généralement sensiblement nulle du fait de la compensation du décalage réalisée lors du prétraitement. On choisit par exemple $\alpha=8$.

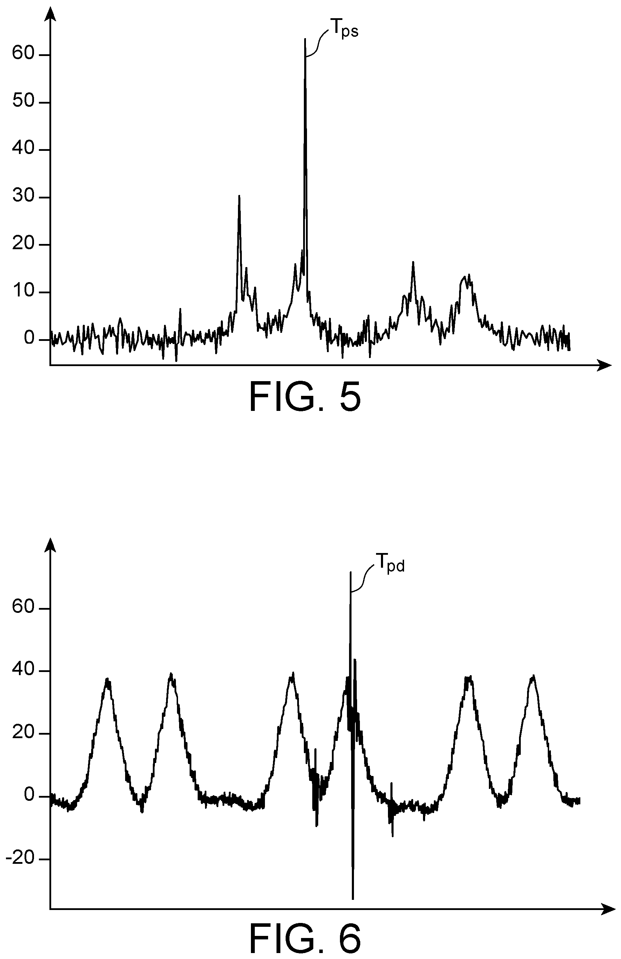

Dans un mode de réalisation possible, une anomalie détectée fait l'objet d'une classification CLAS, par exemple en un premier type d'anomalie ou un deuxième type d'anomalie, au moyen d'une analyse du signal de résidu. Le premier type d'anomalie est par exemple une surcharge d'essieu qui, comme représenté en figure 5, provoque un transitoire Tps du signal de résidu présentant la forme d'un pic simple. Le deuxième type d'anomalie est par exemple une roue carrée qui, comme représenté en figure 6, provoque un transitoire Tpd du signal de résidu de type alternance brusque autour de la courbe de pic d'essieu en « M » présentant la forme d'au moins deux pics simples de signes opposés. Dès lors, l'anomalie détectée peut être classifiée comme anomalie du premier type lorsqu'elle est associée à un pic simple du signal de résidu et peut classifiée comme anomalie du second type lorsqu'elle est associée à au moins deux pics simples de signes opposés.

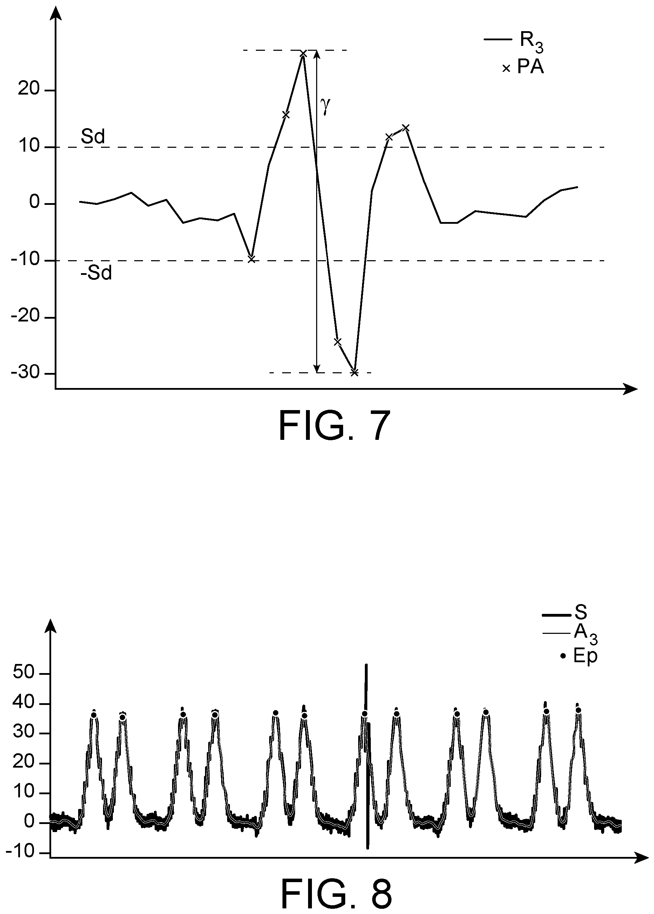

L'analyse du signal de résidu pour réaliser cette classification peut exploiter les points aberrants préalablement détectés pour différencier les différents types d'anomalie. Par exemple, l'anomalie détectée est classifiée comme anomalie du second type lorsqu'elle est associée à des points aberrants dont un présente une amplitude inférieure à un premier seuil négatif et dont un autre présente une amplitude supérieure à un second seuil positif. Comme représenté en figure 7, on peut choisir des seuils symétriques $s_d$ et $-s_d$. L'anomalie est alors classifiée comme caractéristique d'une roue carrée si le minimum des points aberrants de l'anomalie est inférieur à $-s_d$ et si le maximum des points aberrants de l'anomalie est supérieur à sd. Dans le cas contraire, l'anomalie est classifiée comme caractéristique d'une surcharge d'essieu.

Le procédé peut en outre comprendre une datation d'une anomalie détectée, par exemple selon l'instant du maximum en valeur absolue des points aberrants de l'anomalie, selon l'instant de la médiane en valeur absolue des points aberrants de l'anomalie ou encore selon l'instant du premier point aberrant de l'anomalie.

Le procédé peut également comprendre la détermination d'une gravité d'une anomalie détectée. Par exemple, pour une anomalie de type surcharge d'essieu, cette gravité peut correspondre au maximum des points aberrants de l'anomalie. Pour une anomalie de type roue carrée, cette gravité peut par exemple correspondre au plus grand écart d'amplitude y (cf. figure 7) entre points aberrants de l'anomalie.

On relèvera qu'en disposant d'une base de données annotée de cas d'anomalies, un algorithme de classification supervisée peut être entrainé et utilisé pour reconnaître efficacement différents types d'anomalies.

La détection du transit des essieux sur le support et son capteur de déformation se base généralement sur des algorithmes de détection de pics qui recherchent des variations rapides dans le signal de mesure S de déformation. Le choix de paramètres de réglage permet de rendre ces algorithmes moins sensibles au bruit, par exemple en fixant une distance minimale entre deux pics d'essieu ou en fixant une variation minimale en déformation. Toutefois, cette détection n'est pas robuste aux anomalies contenues dans le signal puisque ce sont des phénomènes transitoires qui sont également à variation rapide.

Dans le cadre de l'invention, la reconstruction du signal d'approximation $A_J$ fournit un signal nettoyé du bruit de mesure et des anomalies détectées, sur lequel il est possible d'effectuer la détection des pics d'essieux. Ainsi, dans un mode de réalisation possible de l'invention, le procédé comprend également une étape RECH-Ep de détection de pics dans le signal d'approximation. La figure 8 illustre à cet égard le résultat de la détection des pics d'essieux EP dans la zone de l'anomalie prise en exemple précédemment. Cette détection robuste des pics d'essieu permet notamment la reconnaissance automatique du matériel roulant. En effet les locomotives et wagons possèdent des caractéristiques connues et répertoriées, notamment la longueur des voitures et l'emplacement des bogies qui permettent de calculer les distances entre essieux. Si l'on dispose de deux capteurs de déformation séparés d'une distance connue, la vitesse du train peut facilement être déterminée par décalage temporel des mesures de déformation. En exploitant le signal d'approximation à faible niveau de bruit ou d'anomalies, on évite de fausser l'évaluation des distances entre essieux et de détériorer la reconnaissance automatique du matériel.

L'invention n'est pas limitée au procédé précédemment décrit, mais s'étend également un système de traitement de données configuré pour mettre en œuvre ce ainsi qu'à un produit programme d'ordinateur comprenant des instructions qui, lorsque le programme est exécuté par un ordinateur, conduisent celui-ci à mettre en œuvre ce procédé.

**Revendications**

1. Procédé mis en œuvre par ordinateur de détection d'une anomalie d'un matériel roulant sur des rails de voie ferrée qui reposent sur un support de rails, **caractérisé en ce qu'**il comprend :

   - une décomposition (DECOMP) par transformée en ondelettes d'un signal de mesure (S) délivré par un capteur de déformation du support de rails en un signal d'approximation ($A_J$) et une série de signaux de détail, un signal de résidu ($R_J$) étant formé par la somme de tout ou partie des signaux de détail ;
   - une recherche (RECH-PA) de points aberrants (PA) dans le signal de résidu ($R_J$) pour détecter une anomalie du matériel roulant.

2. Procédé selon la revendication 1, dans lequel la recherche de points aberrants dans le signal de résidu consiste à rechercher les points du signal de résidu dont la valeur absolue de l'amplitude $|r_i|$ satisfait $|r_i| > \mu_{v,R} + \alpha\sigma_{v,R}$, où $\mu_{v,R}$ est la moyenne du bruit contenu dans le signal de résidu, $\sigma_{v,R}$ est l'écart-type du bruit contenu dans le signal de résidu et $\alpha$ est un paramètre de réglage d'une sensibilité de détection.

3. Procédé selon l'une des revendications 1 et 2, comprenant en outre une étape préalable de détermination d'un niveau de décomposition de la décomposition par transformée en ondelettes discrète du signal de mesure, ledit niveau de décomposition minimisant une erreur quadratique donnée par $w(\sigma_{v,R} - \sigma_{v,S})^2 + (\sigma_R - \sigma_{v,S})^2$, où w est un paramètre de pondération, $\sigma_{v,R}$ est l'écart-type du bruit contenu dans le signal de détails, $\sigma_{v,S}$ est l'écart-type du bruit contenu dans le signal de mesure et $\sigma_R$ est l'écart-type du signal de détails.

**4.** Procédé selon l'une des revendications 1 à 3, comprenant en outre en cas de détection d'une anomalie du matériel roulant une classification (CLAS) de l'anomalie détectée en un premier type d'anomalie ou un deuxième type d'anomalie.

**5.** Procédé selon la revendication 4, dans lequel l'anomalie détectée est classifiée comme anomalie du premier type lorsqu'elle est associée à un pic simple du signal de résidu et est classifiée comme anomalie du second type lorsqu'elle est associée à deux pics simples du signal de résidu de signes opposés.

**6.** Procédé selon la revendication 5, dans lequel l'anomalie détectée est classifiée comme anomalie du second type lorsqu'elle est associée à des points aberrants dont un présente une amplitude inférieure à un premier seuil négatif et dont un autre présente une amplitude supérieure à un second seuil positif.

**7.** Procédé selon l'une des revendications 1 à 6, comprenant en outre une étape de détermination d'une gravité d'une anomalie détectée.

**8.** Procédé selon l'une des revendications 1 à 7, comprenant en outre une étape (RECH-Ep) de détection de pics (Ep) dans le signal d'approximation $(A_J)$.

**9.** Système de traitement de données comprenant un capteur de déformation du support de rails et un ordinateur, l'ordinateur comprenant des moyens configurés pour mettre en œuvre le procédé selon l'une des revendications 1 à 8.

**10.** Produit programme d'ordinateur comprenant des instructions qui, lorsque le programme est exécuté par le système de traitement de données selon la revendication 9, conduisent celui-ci à mettre en œuvre le procédé selon l'une des revendications 1 à 8.

**Patentansprüche**

**1.** Computergestütztes Verfahren zur Erkennung einer Anomalie eines rollenden Materials auf Eisenbahnschienen, die auf einem Schienenträger ruhen, **dadurch gekennzeichnet, dass** es Folgendes umfasst:

- eine Zersetzung (DECOMP) eines von einem Deformationssensor des Schienenträgers gelieferten Messsignals (S) durch Wavelet-Transformation in ein Näherungssignal $(A_J)$ und eine Reihe von Detailsignalen, wobei ein Rückstandssignal $(R_J)$ durch die Summe aller oder eines Teils der Detailsignale gebildet wird;
- eine Suche (RECH-PA) nach Ausreißern (PA) im Rückstandssignal $(R_J)$, um eine Anomalie des rollenden Materials zu erkennen.

**2.** Verfahren nach Anspruch 1, wobei die Suche nach Ausreißern in dem Rückstandssignal darin besteht, die Punkte des Rückstandssignals zu suchen, deren absoluter Wert der Amplitude $|r_i|$ $|r_i| > \mu v_{,R} + \alpha \sigma v_{,R}$ erfüllt, wobei $\mu v_{,R}$ der Mittelwert des in dem Rückstandssignal enthaltenen Rauschens ist, $\sigma v_{,R}$ die Standardabweichung des in dem Rückstandssignal enthaltenen Rauschens ist und $\alpha$ ein Parameter zur Einstellung der Erkennungsempfindlichkeit ist.

**3.** Verfahren nach einem der Ansprüche 1 und 2, ferner umfassend einen vorherigen Schritt zur Bestimmung einer Zersetzungsstufe der Zersetzung durch diskrete Wavelet-Transformation des Messsignals, wobei die Zersetzungsstufe einen durch $w(\sigma v_{,R} - \sigma v_{,S})^2 + (\sigma_R - \sigma v_{,S})^2$ gegebenen quadratischen Fehler minimiert, wobei w ein Gewichtungsparameter ist, $\sigma v_{,R}$ die Standardabweichung des im Detailsignal enthaltenen Rauschens ist, $\sigma v_{,S}$ die Standardabweichung des in dem Messsignal enthaltenen Rauschens ist und $\sigma_R$ die Standardabweichung des Detailsignals ist.

**4.** Verfahren nach einem der Ansprüche 1 bis 3, ferner umfassend bei Erkennung einer Anomalie des rollenden Materials eine Klassifizierung (CLAS) der erkannten Anomalie in eine erste Anomalieart oder eine zweite Anomalieart.

**5.** Verfahren nach Anspruch 4, wobei die erkannte Anomalie als Anomalie des ersten Typs eingestuft wird, wenn sie mit einem einfachen Peak des Rückstandssignals verbunden ist, und als Anomalie des zweiten Typs eingestuft wird, wenn sie mit zwei einfachen Peaks des Rückstandssignals gegenüberliegender Zeichen verbunden ist.

**6.** Verfahren nach Anspruch 5, wobei die erkannte Anomalie als Anomalie des zweiten Typs eingestuft wird, wenn sie mit Ausreißern verbunden ist, von denen einer eine Amplitude unter einem ersten negativen Schwellenwert aufweist und ein anderer eine Amplitude über einem zweiten positiven Schwellenwert aufweist.

**7.** Verfahren nach einem der Ansprüche 1 bis 6, ferner umfassend einen Schritt zur Bestimmung eines Schweregrads einer erkannten Anomalie.

**8.** Verfahren nach einem der Ansprüche 1 bis 7, ferner umfassend einen Schritt (RECH-Ep) zur Erkennung von Peaks (Ep) in dem Näherungssignal $(A_J)$.

**9.** Datenverarbeitungssystem, umfassend einen Deformationssensor des Schienenträgers und einen Computer, wobei der Computer Mittel umfasst, die konfiguriert sind, um das Verfahren nach einem der Ansprüche 1 bis 8 umzusetzen.

**10.** Computerprogrammprodukt mit Befehlen, die, wenn das Programm vom Datenverarbeitungssystem gemäß Anspruch 9 ausgeführt wird, dieses dazu veranlassen, das Verfahren gemäß einem der Ansprüche 1 bis 8 durchzuführen.

**Claims**

**1.** Computer-implemented method for detecting an anomaly on rolling stock on railway rails that rest on a rail support, **characterised in that** it comprises:

- a decomposition (DECOMP) by wavelet transform of a measurement signal (S) delivered by a rail-support deformation sensor into an approximation signal ($A_J$) and a series of detail signals, a residue signal ($R_J$) being formed by the sum of all or part of the detail signals;
- a search (RECH-PA) for outliers (PA) in the residual signal ($R_J$) to detect a rolling stock anomaly.

**2.** Method according to claim 1, wherein the search for outliers in the residual signal consists in searching for the points of the residual signal whose absolute value of the amplitude $|r_i|$ satisfies $|r_i| > \mu_{v,R} + \alpha\sigma_{v,R}$ where $\mu_{v,R}$ is the mean of the noise contained in the residual signal, $\sigma_{v,R}$ is the standard deviation of the noise contained in the residual signal and $\alpha$ is a parameter for adjusting a detection sensitivity.

**3.** Method according to one of claims 1 and 2, further comprising a prior step of determining a decomposition level of the decomposition by discrete wavelet transform of the measurement signal, said decomposition level minimising a quadratic error given by $w(\sigma_{v,R} - \sigma_{v,S})^2 + (\sigma_R - \sigma_{v,S})^2$ where $w$ is a weighting parameter, $\sigma_{v,R}$ is the standard deviation of the noise contained in the detail signal, $\sigma_{v,S}$ is the standard deviation of the noise contained in the measurement signal and $\sigma_R$ is the standard deviation of the detail signal.

**4.** Method according to one of claims 1 to **3,** further comprising, in the event of detection of an anomaly on the rolling stock, a classification (CLAS) of the anomaly detected into a first anomaly type or a second anomaly type.

**5.** Method according to claim 4, wherein the detected anomaly is classified as a first-type anomaly when associated with a single peak of the residual signal and is classified as a second-type anomaly when associated with two single peaks of the residue signal of opposite signs.

**6.** Method according to claim 5, wherein the detected anomaly is classified as a second-type anomaly when it is associated with outliers, one of which has an amplitude less than a first negative threshold and another of which has an amplitude greater than a second positive threshold.

**7.** Method according to one of claims 1 to 6, further comprising a step of determining a severity of a detected anomaly.

**8.** Method according to one of claims 1 to 7, further comprising a step (RECH-Ep) of detecting peaks (Ep) in the approximation signal ($A_J$).

**9.** Data processing system comprising a rail-support deformation sensor and a computer, the computer comprising means configured to implement the method according to any one of claims 1 to 8.

**10.** Computer program product comprising instructions which, when the program is executed by the data processing system according to claim 9, cause the latter to implement the method according to one of claims 1 to 8.

FIG. 1

FIG. 2

FIG. 3

FIG. 4

FIG. 5

FIG. 6

FIG. 7

FIG. 8

FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2983812 B1

- EP 2862778 B1

**Littérature non-brevet citée dans la description**

- **V. BELOTTI et al.** Wheel-flat diagnostic tool via wavelet transform. *Mech. Syst. Signal Process.*, November 2006, vol. 20 (8), 1953-1966